**Europäisches Patentamt**

**European Patent Office**

**Office européen des brevets**

(19)

(11)     **EP 1 650 538 A1**

(12)     **EUROPÄISCHE PATENTANMELDUNG**

(43) Veröffentlichungstag:
**26.04.2006 Patentblatt 2006/17**

(51) Int Cl.:
***G01K 7/16*** *(2006.01)*

(21) Anmeldenummer: **05021464.2**

(22) Anmeldetag: **30.09.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **23.10.2004 DE 102004051704**

(71) Anmelder: **LuK Lamellen und Kupplungsbau Beteiligungs KG**
**77813 Bühl (DE)**

(72) Erfinder:
• **Gerhart, Jürgen**
  **77767 Appenweier (DE)**
• **Eggert, Thomas, Dr.**
  **76131 Karlsruhe (DE)**

(54)     **Verfahren zur Bestimmung der Betriebstemperatur von elektrischen Bauteilen**

(57)     Verfahren zur Bestimmung einer Betriebstemperatur von elektrisch betriebenen Bauteilen in einem Kraftfahrzeug durch Vorgabe wenigstens eines ersten Wertes einer den Stromfluss durch das Bauteil beschreibenden elektrischen Größe bei der vorgegebenen Ausgangstemperatur, der Messung eines zweiten Wertes einer den Stromfluss durch das Bauteil beschreibenden elektrischen Größe während eines Betriebszustandes des Bauteiles und der Ermittlung der Betriebstemperatur des Bauteils unter Verwendung des ersten Wertes, der vorgegebenen Ausgangstemperatur und des zweiten Wertes.

EP 1 650 538 A1

**Beschreibung**

Die vorliegende Erfindung bezieht sich auf ein Verfahren zur Bestimmung der Betriebstemperatur von elektrischen Bauteilen insbesondere in einem Kraftfahrzeug. Die Erfindung wird in Bezug auf eine Bestimmung der Betriebstemperatur von Elektromotoren beschrieben, es wird jedoch darauf hingewiesen, dass die Erfindung auch in anderen elektrisch betriebenen Bauteilen in einem Kraftfahrzeug Anwendung finden kann.

Aus dem Stand der Technik ist es bekannt, für das Ansteuern von Kupplungen und Getrieben Elektromotoren zu verwenden. Dabei ist es von besonderer Bedeutung, laufend die Temperatur des jeweiligen Elektromotors zu kontrollieren. Die Temperaturkontrolle dient unter anderem dazu, die Elektromotoren vor Überlastung zu schützen, was dadurch erfolgen kann, dass bei einer bestimmten Motortemperatur eine Warnung ausgegeben wird oder dass, falls eine weitere Grenztemperatur überschritten wird, der Elektromotor abgeschaltet werden kann. Auf diese Weise kann eine thermische Zerstörung des Motors verhindert werden.

Im Stand der Technik sind Verfahren bekannt, bei welchen die Motortemperatur direkt durch Temperatursensoren gemessen wird. Neben den genannten Temperatursensoren sind jedoch für eine derartige Messung auch entsprechende Messleitungen und Eingänge im Steuergerät nötig.

Diesem erfindungsgemäßen Verfahren liegt daher die Aufgabe zu Grunde, die Temperatur von elektrisch betriebenen Bauteilen und deren Umgebung ohne den Einsatz aufwendiger verschleißanfälliger Temperatursensoren zu kontrollieren.

Dies wird erfindungsgemäß durch ein Verfahren nach Anspruch 1 zur Bestimmung der Betriebstemperatur eines elektrisch betriebenen Bauteils in einem Kraftfahrzeug erreicht. Bei diesem Verfahren wird erfindungsgemäß wenigstens ein erster Wert eines den Stromfluss durch das Bauteil beschreibenden elektrischen Größe bei einer vorgegebenen Ausgangstemperatur vorgegeben.

In einem weiteren Verfahrensschritt wird ein zweiter Wert einer den Stromfluss durch das Bauteil beschreibenden elektrischen Größe während eines Betriebszustands des Bauteils gemessen.

In einem weiteren Verfahrensschritt wird die Betriebstemperatur des Bauteils unter Verwendung des ersten Werts, der vorgegebenen Ausgangstemperatur und des zweiten Werts ermittelt.

Unter der Vorgabe eines Wertes wird verstanden, dass dieser den weiteren Verfahrensschritten zu Grunde gelegt wird. Dies kann beispielsweise durch vorhergehende Messung des Wertes, aber auch durch Auslesen eines in einem Speicher eingelesenen Wertes erfolgen. Ferner kann der Wert auch durch andere Einrichtungen bereitgestellt werden.

Unter Betriebstemperatur wird die Temperatur des Bauteils verstanden, die es während des Betriebs des Fahrzeugs aufweist, unabhängig davon, ob das Bauteil zum Zeitpunkt der Temperaturermittlung selbst aktiv betrieben wird.

Bevorzugt werden der erste und der zweite Wert der gleichen elektrischen Größe während des erfindungsgemäßen Verfahrens bestimmt. Dies bedeutet, dass in den jeweiligen betroffenen Verfahrensschritten jeweils Spannungen, Ströme, Widerstände oder dergleichen gemessen werden.

Bevorzugt erfolgt die Ermittlung der Betriebstemperatur unter Verwendung einer Materialkenngröße. Unter einer Materialkenngröße wird eine Kenngröße verstanden, welche wenigstens eine physikalische Eigenheit des Materials, aus dem sich die am Stromfluss beteiligten Komponenten des untersuchten Bauteils zusammensetzen, beschreibt. Bevorzugt handelt es sich bei der Materialkenngröße um den Temperaturkoeffizienten $\alpha$ des Materials.

Bei einer bevorzugten Ausführungsform ist das elektrisch betriebene Bauteil ein Elektromotor. Es ist jedoch auch möglich, das Verfahren auf weitere Komponenten der Wirkkette einer Aktoransteuerung, d.h. beispielsweise weitere Aktormotoren oder das Steuergerät anzuwenden.

Bei einem weiteren Verfahrensschritt ist die den Stromfluss durch das Bauteil beschreibende Größe aus einer Gruppe von Größen ausgewählt, welche die an dem Bauteil anliegende Spannung, den durch das Bauteil fließenden Strom und insbesondere den elektrischen Widerstand des Bauteils enthält. Dabei ist zu beachten, dass die genannten Größen miteinander korreliert sind und auf diese Weise auch eine jeweils indirekte Bestimmung einzelner Größen erfolgen kann wie beispielsweise eine Bestimmung des Widerstandes aus dem Verhältnis der anliegenden Spannung zum fließenden Strom.

Bevorzugt wird als Größe der elektrische Widerstand des Bauteils ermittelt.

Bevorzugt wird ferner die Ausgangstemperatur aus einer Gruppe von Temperaturen bestimmt, welche die Kühlwassertemperatur, die Getriebeöltemperatur, die Außentemperatur, die Platinentemperatur des Steuergeräts und/ oder dergleichen enthält.

Dabei kann die Ausgangstemperatur durch arithmetische Mittelungsverfahren aus einer Gruppe von Temperaturen bestimmt werden, welche die Kühlwassertemperatur, die Getriebeöltemperatur, die Außentemperatur, die Platinentemperatur des Steuergeräts und oder dergleichen enthält. Bei diesen arithmetischen Mittelungen können auch Gewichtungen vorgenommen werden, d.h. dass einzelne Temperaturen stärker berücksichtigt werden als andere. Auf diese Weise kann berücksichtigt werden, dass sich einige Komponenten eines Kraftfahrzeugs erheblich langsamer abkühlen als andere.

Ferner kann auch mit der Bestimmung der Ausgangstemperatur solange gewartet werden, bis die genannten Temperaturen auf einem im Wesentlichen gleichen Niveau liegen. Dies ist beispielsweise der Fall, wenn das Fahrzeug sehr lange Zeit nicht betrieben wird. In diesem Fall ist eine Bestimmung mehrerer unterschiedlicher Temperaturen unnötig und als Ausgangstemperatur kann eine bestimmte Temperatur gewählt werden wie beispielsweise die Kühlwassertemperatur, da davon ausgegangen werden kann, dass die übrigen Temperaturen der Kühlwassertemperatur entsprechen.

Aus der Ausgangstemperatur, die gleichzeitig die Ausgangstemperatur des betriebenen Bauteils darstellt, kann auf die den Stromfluss durch das Bauteil beschreibende Größe geschlossen werden, wobei es sich bei dieser Größe wie oben dargestellt bevorzugt um den Widerstand des Bauteils handelt.

Bevorzugt wird die erste den Stromfluss durch das Bauteil beschreibende elektrische Größe aus vorgegebenen, für das Bauteil charakteristischen Daten ermittelt.

Bevorzugt erfolgt eine Ermittlung dieses Widerstandswertes aus vorgegebenen Daten wie etwa den Werten des Datenblattes des Elektromotors mit den Werten bei Raumtemperatur. Der Widerstand $R_{star}$ des Motors ergibt sich dabei nach folgender Gleichung:

$$R(T) = R_{Start} \cdot (1 + \alpha(T - T_{Start})) \qquad (1)$$

Dabei bezeichnet $R_{Start}$ den zu ermittelnden Widerstandswert des Motors bei der oben ermittelten Temperatur $T_{Start}$. $R_0$ bezeichnet den Widerstand bei der Raumtemperatur $T_0$, wobei die Raumtemperatur beispielsweise eine Temperatur von 25° Celsius ist.

Allgemein gilt für die Beziehung zwischen dem temperaturabhängigen Widerstand folgende Gleichung:

$$R_{Start} = R_0(1 + \alpha(T_{Start} - T_0)) \qquad (2)$$

Aus den Gleichungen (1) und (2) ergibt sich für die Abhängigkeit des Widerstands von der Temperatur eine lineare Abhängigkeit. Diese lineare Abhängigkeit beruht darauf, dass über den Temperaturkoeffizienten $\alpha$ ein lineares Verhältnis zwischen Temperatur und Widerstand gegeben ist. Auf diese Weise kann bei einer bekannten Temperatur $T_{Start}$ und dem Temperaturkoeffizienten $\alpha$, d.h. dem Linearitätsfaktor zwischen dem Widerstand und der Temperatur, der Widerstand $R_{Start}$ berechnet werden. Im Falle des für die Motoren bevorzugt verwendeten Kupfers liegt der Temperaturkoeffizient $\alpha$ bei 0,004 $K^{-1}$.

Der Widerstand des Kupfers und das lineare Verhältnis von Widerstand und Temperatur von Kupfer ändern sich über die Lebensdauer der jeweiligen Bauteile nur unwesentlich. Aus diesem Grund muss für eine fest vorgegebene Kombination von Steuergerät, Ansteuerelektronik und Elektromotor mindestens einmal die Initialisierungswerte $T_{Start}$ und $R_{Start}$ ermittelt werden und den oben genannten Berechnungen zu Grunde gelegt werden.

Bevorzugt werden die Werte für die Temperatur $T_{Star}$ und den Widerstand $R_{start}$ einmal, beispielsweise bei Inbetriebnahme des Kraftfahrzeugs, gemessen. Eine erneute Messung findet bevorzugt bei einem Austausch einzelner Komponenten des Bauteils oder deren Peripherie statt.

Die mittels der obigen Gleichungen bzw. durch Messung ermittelten Werte $R_{start}$ und $T_{Start}$ werden für die spätere Ermittlung der aktuellen Motortemperatur bevorzugt in einer Speichereinrichtung, wie bevorzugt einem EE-PROM des Steuergerätes gespeichert.

Wie oben angemerkt ist diese erste Ermittlung von $R_{start}$ und $T_{Start}$ bzw. diese Initialisierung nur einmal während der Lebensdauer der beteiligten Komponenten nötig. Es ist bevorzugt auch möglich, diese Initialisierung immer dann vorzunehmen, wenn die genannten Bedingungen erfüllt sind, d.h. wenn die Temperatur $T_{Start}$ ermittelt werden kann, was beispielsweise nach einer längeren Ruhepause des Kraftfahrzeugs möglich ist. Dann ist es auch möglich, die Initialisierung nur bei der Inbetriebnahme des Fahrzeugs während der Produktion und bei einem eventuellen Austausch einzelner Komponenten in einer Werkstatt durchzuführen.

Bei einer weiteren bevorzugten Variante wird die erste den Stromfluss durch das Bauteil beschreibende elektrische Größe durch Messung des durch das Bauteil fließenden Stroms und der am Bauteil anliegenden Spannung gemessen.

Bevorzugt wird die erste den Stromfluss durch das Bauteil beschreibende elektrische Größe durch Messung der Batteriespannung und Batteriestroms gemessen. Durch diese Messung des Wertes $R_{Start}$ kann unabhängig von der oben durch Lösung der Gleichung ermittelten Größe $R_{Start}$ dieser Wert durch Messung ermittelt werden. Dabei kann die Messung und die Bestimmung mittels der Gleichung unabhängig voneinander erfolgen, die Messung des Wertes $R_{Start}$ kann jedoch auch mit dem berechneten Wert $R_{Start}$ verglichen werden.

Ergibt sich bei einem Vergleich dieser beiden Werte, dass diese innerhalb einer vorgegebenen Toleranz vergleichbar sind, lässt sich darauf schließen, dass sich der Motor und die Komponenten, deren Temperaturwerte vorliegen, im thermischen Gleichgewicht befunden haben.

Ferner können auch beliebige arithmetische Mittelwerte aus dem gemessenen und den mit den Formeln (1) und (2) berechneten Wert $R_{start}$ verwendet werden, wobei durch beliebige Gewichtungen eine etwaige Ungenauigkeit von Messung und mathematischer Ermittlung berücksichtigt werden kann.

Bei einer bevorzugten Variante erfolgt die Messung des Wertes $R_{Start,Mess}$ über eine Messung der Motorspannung $U_{Motor}$ und des Motorstroms $I_{Motor}$. In diesem Fall ergibt sich der gemessene Widerstand $R_{Start}$, nach folgender Gleichung:

$$R_{Start,Mess} = U_{Motor} / I_{Motor} \qquad (3)$$

Alternativ ist es auch möglich, den Gesamtwiderstand sämtlicher beteiligten Komponenten, d.h. des Motors, der Ansteuerelektronik und dergleichen zu bestimmen, wobei sich der Gesamtwiderstand $R_{ges}$ nach unten stehender Gleichung ergibt:

$$R_{ges} = U_{Batt} / I_{Batt} \qquad (4)$$

In Gleichung (4) bezeichnet $U_{Batt}$ die Batteriespannung und $I_{Batt}$ den Batteriestrom.

Um aus dem ermittelten Gesamtwiderstand $R_{Ges}$ den obigen Wert $R_{Start,Mess}$ zu berechnen, werden alle Verluste der gesamten Wirkkette und unter Umständen auch die physikalischen Gleichungen des Elektromotors und der Ansteuerelektronik verwendet.

Bevorzugt ist es auch hier möglich, den Gesamtwiderstand und den obigen $R_{Start,Mess}$ zu ermitteln und durch geeignete arithmetische Ermittlungen einen Wert für einen Widerstand zu errechnen.

Bevorzugt wird die zweite den Stromfluss durch das Bauteil beschreibende elektrische Größe durch mehrere Verfahren gemessen, und aus den gemessenen Werten wird durch vorgegebene arithmetische Verfahren ein Mittelwert gebildet.

Auf Grundlage der so ermittelten, gemessenen und berechneten Werte kann nun zu jedem beliebigen Zeitpunkt die aktuelle Motortemperatur bestimmt werden, indem folgende Gleichung zu Grunde gelegt wird, welche sich durch mathematische Umstellung der unter (1) und (2) genannten Gleichungen ergibt:

$$T = \frac{1}{\alpha}\left(\frac{R(T)}{R_{Start}} - 1\right) + T_{Start} \qquad (5)$$

In Gleichung (5) bezeichnet T die zu ermittelnde Temperatur, $\alpha$ den Temperaturkoeffizienten, R(T) den Widerstand des Motors bei der Temperatur T, $R_{Start}$ den obigen Initialisierungswiderstandwert und $T_{Start}$ die Initialisierungstemperatur. Der Wert R(T) wird über die oben genannten Verfahren nach den Formeln (3) oder (4) bestimmt.

Bevorzugt wird die Temperatur während des gesamten Betriebs in regelmäßigen Abständen geprüft. Bei einer weiteren bevorzugten Variante wird die Temperatur laufend bzw. ständig ermittelt. Bevorzugt ist es ferner auch möglich, beim Auftreten bzw. Überschreiten einer vorgegebenen Grenztemperatur ein Warnsignal abzugeben bzw. bei einem weiteren Ansteigen die Spannungsversorgung für den betreffenden Motor abzuschalten.

Bei einer weiteren bevorzugten Variante kann die Frequenz der Temperaturmessungen an die jeweils gemessene Temperatur angepasst werden. So kann bei steigender Temperatur bzw. bei einer Temperatur, die oberhalb eines vorgegebenen Grenzwertes liegt, die Frequenz der Messungen erhöht werden.

Wie eingangs aufgeführt, kann das erfindungsgemäße Verfahren auch auf alle anderen Komponenten der Wirkkette der Aktoransteuerung übertragen werden. Allgemein ist eine Übertragung des erfindungsgemäßen Verfahrens auf elektrisch betriebene Bauteile möglich.

Da wie erwähnt, auch die Starttemperatur $T_{Start}$ für die Genauigkeit der jeweils ermittelten Bauteiltemperaturen ausschlaggebend ist, ist hinsichtlich der Genauigkeit der gesamten Messung zu beachten, dass sowohl die Temperatur nur im Rahmen der Toleranzen der zur Verfügung stehenden Temperaturen gemessen werden kann, so dass auf diese Weise auch die endgültige Messung der Betriebstemperaturen gewissen Schwankungen unterworfen ist. Aus diesem Grunde ist es wie eingangs erwähnt vorteilhaft, mehrere Temperaturmessungen an verschiedenen Bereichen des Kreislaufs durchzuführen wie beispielsweise die Außentemperaturen, die Platinentemperaturen oder die Kühlwassertemperatur, und aus diesen Werten Mittelwerte zu bilden. Auch können die einzelnen Widerstände nur mit einer begrenzten Genauigkeit bestimmt werden. Daher ist es auch vorteilhaft, die jeweiligen Widerstände auf verschiedene Arten zu messen, und aus diesen Messungen plausible Mittelwerte zu bilden.

Wie ausgeführt, ist es für das erfindungsgemäße Verfahren von besonderer Bedeutung, dass das Verhältnis zwischen Temperatur und Widerstand im Falle von Kupfer im Wesentlichen linear verläuft. Dabei wird die Tatsache ausgenutzt, dass dieser lineare Verlauf insbesondere in dem für die Erfindungen genannten Bereich von 0 bis 150° Celsius vorhanden ist.

Die vorliegende Erfindung bezieht sich weiterhin auf eine Anordnung zur Bestimmung einer Betriebstemperatur von elektrisch betriebenen Bauteilen in einem Kraftfahrzeug mit einer Prozessoreinheit, die derart eingerichtet ist, dass die Vorgabe wenigstens eines ersten Wertes einer den Stromfluss durch das Bauteil beschreibenden elektrischen Größe bei der vorgegebenen Ausgangstemperatur möglich ist sowie die Messung eines zweiten Wertes einer den Stromfluss durch das Bauteil beschreibenden elektrischen Größe während eines Betriebszustands des Bauteils und dass schließlich die Ermittlung der Betriebstemperatur des Bauteils unter Verwendung des ersten Wertes, der vorgegebenen Ausgangstemperatur und des zweiten Wertes erfolgt. In der bevorzugten Ausführungsform weist die erfindungsgemäße Prozessoreinheit auch eine Speichereinheit auf, in welcher der Wert der vorgegebenen Ausgangstemperatur sowie der erste Wert der den Stromfluss durch das Bauteil beschreibenden Größe gespeichert werden.

Bevorzugt ermittelt dabei die Prozessoreinheit die Betriebstemperatur des elektrisch betriebenen Bauteils durch Anwendung der Gleichung (5).

## Patentansprüche

1. Verfahren zur Bestimmung einer Betriebstemperatur eines elektrisch betriebenen Bauteils in einem Kraftfahrzeug mit den Schritten:

   - Vorgabe wenigstens eines ersten Wertes einer den Stromfluss durch das Bauteil beschreibenden elektrischen Größe bei einer vorgegebenen Ausgangstemperatur;
   - Messung eines zweiten Wertes einer den Stromfluss durch das Bauteil beschreibenden elektrischen Größe während eines Betriebszustandes des Bauteiles;
   - Ermittlung der Betriebstemperatur des Bauteils unter Verwendung des ersten Wertes, der vorgegebenen Ausgangstemperatur und des zweiten Wertes.

2. Verfahren nach Anspruch 1, **dadurch gekennzeichnet, dass** das elektrisch betriebene Bauteil ein Elektromotor ist.

3. Verfahren nach wenigstens einem der vorangegangenen Ansprüche, **dadurch gekennzeichnet, dass** der erste Wert und der zweite Wert Werte der gleichen den Stromfluss durch das Bauteil beschreibenden Größe sind.

4. Verfahren nach wenigstens einem der vorangegangenen Ansprüche, **dadurch gekennzeichnet, dass** die Ermittlung der Betriebstemperatur unter Verwendung einer Materialkenngröße erfolgt.

5. Verfahren nach wenigstens einem der vorangegangenen Ansprüche, **dadurch gekennzeichnet, dass** die den Stromfluss durch das Bauteil beschreibenden Größen aus einer Gruppe von Größen ausgewählt ist, welche die an dem Bauteil anliegende Spannung, den durch das Bauteil fließenden Strom und insbesondere den elektrischen Widerstand des Bauteils enthält.

6. Verfahren nach wenigstens einem der vorangegangenen Ansprüche, **dadurch gekennzeichnet, dass** die Ausgangstemperatur aus einer Gruppe von Temperaturen ermittelt wird, welche die Kühlwassertemperatur, die Getriebeöltemperatur, die Außentemperatur, die Platinentemperatur des Steuergeräts und/oder dergleichen enthält.

7. Verfahren nach wenigstens einem der vorangegangenen Ansprüche, **dadurch gekennzeichnet, dass** die Ausgangstemperatur durch arithmetische Mittelungsverfahren aus einer Gruppe von Temperaturen bestimmt wird, welche die Kühlwassertemperatur, die Getriebeöltemperatur, die Außentemperatur, die Platinentemperatur des Steuergeräts und/oder dergleichen enthält.

**8.** Verfahren nach wenigstens einem der vorangegangenen Ansprüche, **dadurch gekennzeichnet, dass** der Wert der vorgegebenen Ausgangstemperatur in einem Speicher abgelegt wird.

**9.** Verfahren nach wenigstens einem der vorangegangenen Ansprüche, **dadurch gekennzeichnet, dass** der erste Wert der den Stromfluss durch das Bauteil beschreibenden Größe in einem Speicher abgelegt wird.

**10.** Verfahren nach wenigstens einem der vorangegangenen Ansprüche, **dadurch gekennzeichnet, dass** die erste den Stromfluss durch das Bauteil beschreibende elektrische Größe aus vorgegebenen für das Bauteil charakteristischen Datensätzen ermittelt wird.

**11.** Verfahren nach wenigstens einem der vorangegangenen Ansprüche, **dadurch gekennzeichnet, dass** die erste den Stromfluss durch das Bauteil beschreibende elektrische Größe durch Messung des durch das Bauteil fließenden Stromes und der an dem Bauteil anliegenden Spannung gemessen wird.

**12.** Verfahren nach wenigstens einem der vorangegangenen Ansprüche, **dadurch gekennzeichnet, dass** die erste den Stromfluss durch das Bauteil beschreibende elektrische Größe durch Messung der Batteriespannung und des Batteriestromes gemessen wird.

**13.** Verfahren nach wenigstens einem der vorangegangenen Ansprüche, **dadurch gekennzeichnet, dass** die ermittelten und die gemessenen ersten elektrischen Größen miteinander verglichen werden.

**14.** Verfahren nach wenigstens einem der vorangegangenen Ansprüche, **dadurch gekennzeichnet, dass** die zweite den Stromfluss durch das Bauteil beschreibende elektrische Größe durch Messung des durch das Bauteil fließenden Stromes und der an dem Bauteil anliegenden Spannung gemessen wird.

**15.** Verfahren nach wenigstens einem der vorangegangenen Ansprüche, **dadurch gekennzeichnet, dass** die zweite den Stromfluss durch das Bauteil beschreibende elektrische Größe durch Messung der Batteriespannung und des Batteriestromes gemessen wird.

**16.** Verfahren nach wenigstens einem der vorangegangenen Ansprüche, **dadurch gekennzeichnet, dass** die zweite den Stromfluss durch das Bauteil beschreibende elektrische Größe durch mehrere Verfahren gemessen wird und aus den gemessenen Werten durch vorgegebene arithmetische Verfahren ein Mittelwert gebildet wird.

**17.** Anordnung zur Bestimmung einer Betriebstemperatur von elektrisch betriebenen Bauteilen in einem Kraftfahrzeug mit einer Prozessoreinheit, die derart eingerichtet ist, dass folgende Schritte durchführbar sind:

- Vorgabe wenigstens eines ersten Wertes einer den Stromfluss durch das Bauteil beschreibenden elektrischen Größe bei der vorgegebenen Ausgangstemperatur;
- Messung eines zweiten Wertes einer den Stromfluss durch das Bauteil beschreibenden elektrischen Größe während eines Betriebszustandes des Bauteiles;

Ermittlung der Betriebstemperatur des Bauteils unter Verwendung des ersten Wertes, der vorgegebenen Ausgangstemperatur und des zweiten Wertes.

**Europäisches Patentamt**

# EUROPÄISCHER RECHERCHENBERICHT

**Nummer der Anmeldung**

EP 05 02 1464

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 072 165 A (MIMURA ET AL) 10. Dezember 1991 (1991-12-10) * Spalte 4, Zeile 39 - Zeile 55 * * Spalte 7, Zeile 4 - Zeile 44 * * Abbildung 2 * ----- | 1-17 | G01K7/16 |
| A | US 2004/080333 A1 (KLEIN HANS-WILHELM) 29. April 2004 (2004-04-29) * Absätze [0006], [0007], [0054] - [0059] * ----- | 1-17 | |
| A | DE 197 25 267 A1 (ROBERT BOSCH GMBH, 70469 STUTTGART, DE) 24. Dezember 1998 (1998-12-24) * Spalte 2, Zeile 3 - Zeile 25 * ----- | 1-17 | |

| RECHERCHIERTE SACHGEBIETE (Int.Cl.7) |
|---|
| G01K F16D H02H |

Der vorliegende Recherchenbericht wurde für alle Patentansprüche erstellt

| Recherchenort | Abschlußdatum der Recherche | Prüfer |
|---|---|---|
| Den Haag | 1. November 2005 | de Bakker, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 02 1464

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-11-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 5072165 | A | 10-12-1991 | GB | 2233419 A | 09-01-1991 |
| | | | JP | 2114720 C | 06-12-1996 |
| | | | JP | 3033516 A | 13-02-1991 |
| | | | JP | 8026909 B | 21-03-1996 |
| US 2004080333 | A1 | 29-04-2004 | AT | 302489 T | 15-09-2005 |
| | | | DE | 10119201 A1 | 24-10-2002 |
| | | | WO | 02087050 A1 | 31-10-2002 |
| | | | EP | 1382104 A1 | 21-01-2004 |
| DE 19725267 | A1 | 24-12-1998 | WO | 9858433 A1 | 23-12-1998 |

EPO FORM P0461

Für nähere Einzelheiten zu diesem Anhang : siehe Amtsblatt des Europäischen Patentamts, Nr.12/82